# EUROPEAN PATENT APPLICATION

(11) **EP 4 606 705 A1**
(43) Date of publication of application: **27.08.2025**
(21) Application number: 24461532.4
(22) Date of filing: 23.02.2024
(51) Int. Cl.: B64D 11/06, B60N 3/00, B60N 2/30

(54) **FOLDABLE TABLE SYSTEM**

(71) Applicant: B/E Aerospace Fischer GmbH, 84034 Landshut (DE)
(72) Inventor: KO ODZIEJCZAK, Marcin Szymon, 51-317 Wroc aw (PL); KALISZCZYK, Piotr Krzysztof, 51-317 Wroclaw (PL)
(74) Representative: Dehns

(57) **Abstract**

A foldable table system for incorporation in a seat pan, the system comprising: a table (5) having a first end (51a) and a second end (51b), a table top surface (51) extending from the first end to the second end, and a table bottom surface (52) extending from the first end to the second end, and a lifting assembly (6) to which the table is attached, the lifting assembly expandable from a lowered position to a raised position as the table is raised from a stowed state to an open state, wherein the lifting assembly comprises: an upper bar (72) and a lower bar (71) extending essentially parallel to each other, the upper bar being attached to the table (5), and a pair of legs (73, 74) each having a first end (73a, 74a) connected to the upper bar (72) and a second end (73b, 74b) connected to the lower bar (71), the legs arranged to cross each other at a point (X) between the upper bar and the lower bar, and wherein one of the legs (73) has its first end fixedly connected to the upper bar (72) and its second end slidably connected to the lower bar, and the other of the legs has its first end fixedly connected to the lower bar and its second end slidably connected to the lower bar, such that as the upper bar is raised relative to the lower bar, the ends of the legs which are slidably connected slide along the respective bar towards the end of the opposite leg that is fixedly connected to that bar in a scissor motion.

## Description

### TECHNICAL FIELD

This disclosure relates to a foldable table system mounted in a seat base or seat pan e.g. a seat in a vehicle or aircraft e.g. airplane or helicopter.

### BACKGROUND

In various settings, such as, but not only, in vehicles or aircraft, tables may be mounted to seats or provided in seat areas for use. The tables are mounted such that they can be folded out for use or folded back to be stowed in a part of the seat structure when not in use. Such tables are particularly useful when, for example, space is restricted and/or where, for reasons of safety, convenience or comfort, the table should not always be in the opened-out state. It is known, for example, to have foldable tables or surfaces mounted in seat arms or seat backs in passenger vehicles or aircraft. In some cases, the table is mounted to the back of a seat back rest such that a passenger in a seat behind the seat in which the table is mounted, can access and fold out the table from the back of the back rest in front of them. In other systems, the table can be stowed in a recess in a seat arm rest and folded out over the lap of the user of the seat when needed. In other systems, the table may be mounted in and stowed in the front of the seat back against which the back of a person in the seat would usually rest. With these systems, the bottom surface of the table (with reference to its opened out state) is provided with cushioning so that when the table is stowed, the seat back appears and functions as a regular seat back. If, however, the seat is not in use, the table can be folded out so that the seat provides, instead, a table area e.g. for a person in an adjacent seat or just to make use of the vacant seat to provide a useful table surface. Such tables are often provided in helicopters where space is restricted and where a pilot or passenger may need a useful table surface rather than a spare seat. Such systems can also be used in aircraft e.g. in Business or first class seats, where passengers are often given a seat with an adjacent seat next to them being kept vacant to provide the passenger with more space and privacy. In such cases, the vacant seat can then provide a table for that passenger.

These table systems are also often provided with cup or beverage holders in the form of holes or receptacles. These may be formed in the table itself, or may be attached to and foldable from the table.

In all such table systems, it is desirable that, at least in the stowed state, the table is locked in place. This is especially important in high vibrational environments such as in vehicles or aircraft. Often, the table is secured in the stowed position by a simple latch extending between the seat back and the table that can be opened by simple rotation by a user. Where the table is in the front of the seat back, and is provided with cushioning, often the seat is just held in place by friction and due to gravity and the slightly inclined angle of the seat.

While such table systems have generally proved fit for purpose, there is always a desire to improve the systems in terms of their ease and safety of use, space saving design, and secure stowing. There is a desire to provide a table that does not affect seat comfort, when stowed, and does not take a lot of space in the seat (and so affect cushioning or space for other seat features). There is also a desire, especially in high motion or vibrational uses, to ensure that the table is locked in its closed position and preferably also in its open position.

### SUMMARY

According to this disclosure, there is provided a foldable table system assembled in a seat pan and provided with a built-in lifting system. More specifically, there is provided a foldable table system for incorporation in a seat pan, the system comprising: a table having a first end and a second end, a table top surface extending from the first end to the second end, and a table bottom surface extending from the first end to the second end, and a lifting assembly to which the table is attached, the lifting assembly expandable from a lowered position to a raised position as the table is raised from a stowed state to an open state. Wherein the lifting assembly comprises: an upper bar and a lower bar extending essentially parallel to each other, the upper bar being attached to the table, and a pair of legs each having a first end connected to the upper bar and a second end connected to the lower bar, the legs Arranged to cross each other at a point between the upper bar and the lower bar, and wherein one of the legs has its first end fixedly connected to the upper bar and its second end slidably connected to the lower bar, and the other of the legs has its first end fixedly connected to the lower bar and its second end slidably connected to the lower bar, such that as the upper bar is raised relative to the lower bar, the ends of the legs which are slidably connected slide along the respective bar towards the end of the opposite leg that is fixedly connected to that bar in a scissor motion.

A releasable locking means may be provided for releasably locking the slidably connected end of each leg to the respective bar when the upper bar has reached a given height relative to the lower bar.

The upper bar and the lower bar may each have a slot within which the respective ends of the legs are slidably connected to the respective bar.

The table may be pivotably attached at a pivot point to the upper bar.

The bottom surface of the table may be provided with cushioning.

In embodiments, the system has two said lifting assemblies, one provided on each side of the table.

A tab or strap may be attached to the table to lift the table

Also provided is a seat e.g. an aircraft seat incorporating such a table assembly and a method of operating the table assembly.

### BRIEF DESCRIPTION

Examples of the table system will now be described with reference to the drawings. It should be noted that these are examples only and variations are possible within the scope of the claims.
Figure 1 shows a seat with a foldable table according to this disclosure with the table in the stowed position.
Figure 2 shows the example of Fig. 1 but with the table in the open position.
Figure 3 shows a close up the example of Figs. 2 and 3.
Figure 4 illustrates, in more detail, an example of a table according to the disclosure.
Figures 5A to 5D illustrate the operation of a table according to the disclosure.

### DETAILED DESCRIPTION

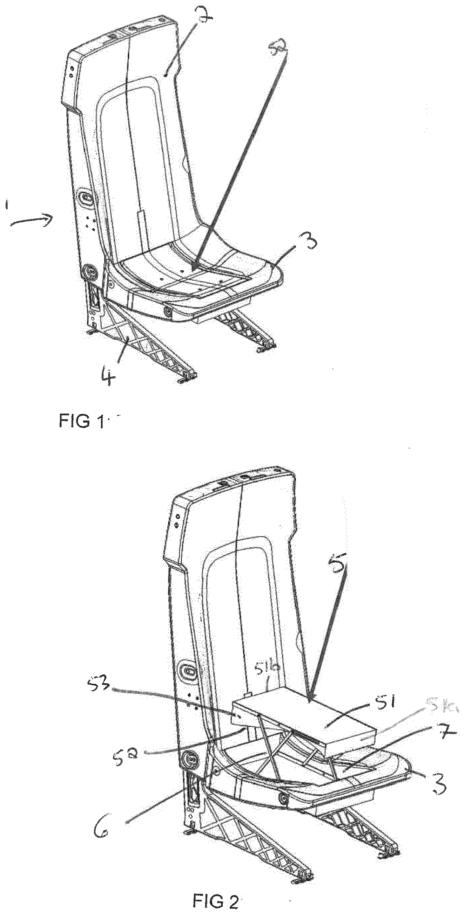

With reference to Figs. 1 to 4, the table system according to this disclosure is mounted to a seat pan 3 of a seat 1. The seat also has a seat back 2. In the example shown, the seat is provided with mounting feet 4 to allow the seat to be mounted to e.g. floor tracks in a vehicle or aircraft. The table assembly is not, however, limited to use in such seats and can be incorporated into other types of seat for other environments.

The table system comprises a table 5 having a first end 51a and a second end 51b, a table top surface 51 extending from the first end to the second end, and a table bottom surface 52 extending from the first end to the second end. The table 5 is mounted by a lifting assembly 6, to be described in more detail below, to a recess 7 in the seat pan 3 such that the table can be raised and lowered via the lifting assembly 6 between a closed position (Fig. 1) where the table 5 is positioned within the recess 7 with its table top surface 51 lying against or facing the floor of the recess 6 and its bottom surface 52 facing outwards towards the user when seated, and an open position (Fig. 2) in which the table has been lifted and rotated out of the recess so that its table top surface 51 is now in an upward-facing, raised and flat orientation. The table bottom surface 52 may be provided with cushioning 53 to provide a comfortable seat when the table is closed/stowed - i.e. that this cushioned back side of the table forms part of the base of the seat on which the user sits, when the table is stowed in the recess.

The table may also optionally be provided with accessories such as one or more cup holders. These can be fitted into slots or rails to slide out from the table when in use and slide back inside the table when not in use, or they can be foldable relative to the table. Alternatively, the top of the table can be provided with cut-outs or recesses to hold cups or drinks. Cup holders are, however, not necessarily provided with the table.

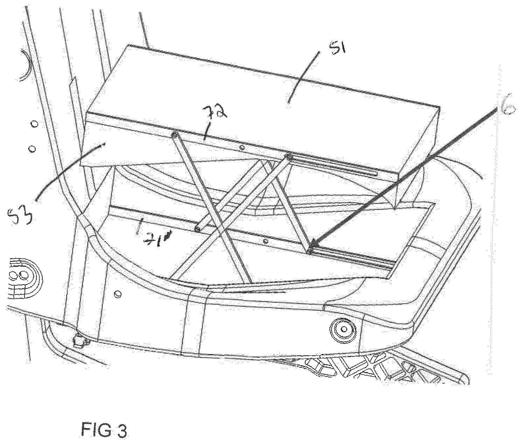

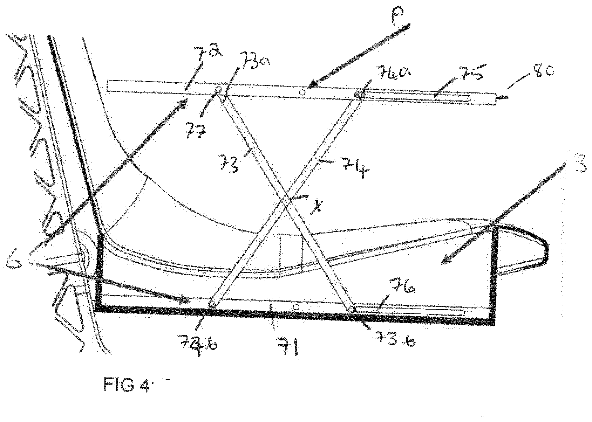

The table 5 is attached to the bottom of the recess 7 by means of the lifting assembly 6 which is in the form of a scissor-type lifting mechanism. This can be seen most clearly in Figs. 3 and 4. The lifting assembly 7 comprises a lower bar 71, an upper bar 72 and first and second legs 73, 74 each of the legs connected at a first end 73a, 74a to the upper bar 72 and at the other, second end 73b, 74b to the lower bar 71 and the legs crossing each other at a point X intermediate their ends which are attached to the bars. One of the legs 73 is fixedly attached to the upper bar72 at its first end 73a and moveably attached to the lower bar at its second end 73b. The other leg 74 is fixedly attached to the lower bar 71 at its second end 74b and moveably attached to the upper bar 72 at its first end 74a.

The moveable attachments are provided by a respective slot 75, 76 in each of the upper bar and the lower bar in which the respective end of the respective leg is slidably received. The legs may be attached to the bars by e.g. pins 77, whereby for the ends of the legs which are moveably attached to the bar by being slidably attached in the slots 75, 76, the pins 77 are sized and shaped to be relatively tightly held in the slot but with sufficient play for them to slide along the slot as the table is raised and lowered due to the scissor movement of the lifting assembly 6.

The table 5 is carried by and attached to the upper bar 72 at a pivot point P. This may be intermediate the points on the upper bar where the first and second legs are attached. Whilst it is conceivable that the table can be carried by a lifting assembly just having an upper bar, lower bar and pair of legs on one long edge of the table (i.e. an edge between the first end 51a and the second end 51b), a more stable arrangement has a corresponding structure also on the other long side of the table as seen in Fig. 3. In other words, the lifting assembly has a first upper bar 72, lower bar 71 and crossed first and second legs 73, 74 on one side (along on long side) of the table, with one long side of the table pivotably attached at point P to the first upper bar, and a second similar arrangement on the other side of the table, the opposite long side of the table pivotally attached to the upper bar on the other side. The two upper bars therefore provide a frame for the table, whereby the table 5 can be pivoted about point P relative to that frame. The corresponding lower bars 71, 71' extend along opposite sides (sides that extend from the front to the back of the seat pan) of the seat pan recess 7.

In the example shown, the first and second legs are attached to an outer side of the respective bars and the table is provided on the insides of the bars.

Whilst the table can be flat on both its upper and lower surfaces, comfort is improved, in the stowed state, is the table is provided on one surface with cushioning 53, The cushioning may match the cushioning on the rest of the seat for aesthetic reasons or may have a contrasting appearance to identify the location of the table in the seat pan when stowed.

The table 5 may be provided with a tab 80 or strap or the like which is accessible to a user even when the table is stowed. To lift the table from its stowed state to its usable state, the user may first pull on the tab to start the release of the table from the recess.

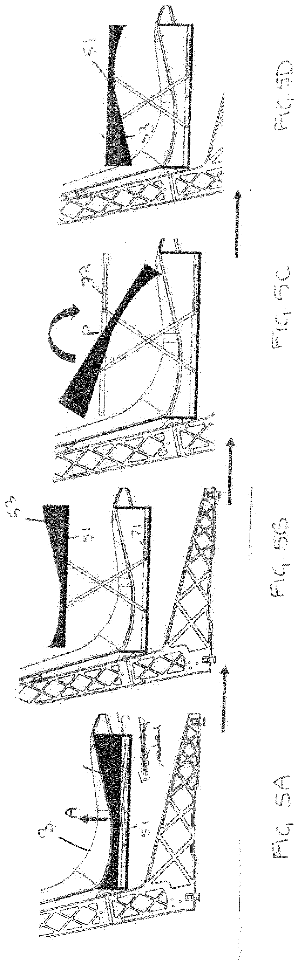

Operation of the assembly will now be described with particular reference to Figs. 5A to 5D.

Fig. 5A shows an example of a table in a stowed state, stowed in the seat pan 3. In this state, the lifting assembly 6 is in a collapsed or lowered state whereby the first and second legs lie essentially parallel with or extend in substantially the same direction as the upper and lower bars, which lie adjacent each other within the recess below the table 5. This configuration is enabled by the ends of the legs that are slidably located in the slots being slid to an end of the slot furthest from the fixed attachment point of the other leg on the same bar. The legs therefore pivot relative to each other about the point X where they cross, in a scissor movement. Also, in this stowed state, the table is orientated relative to the upper bars 72 such that its lower side (here provided with cushioning 53, faces upwards (arrow A)- i.e. away from the recess 7 forming part of the seating surface of the seat pan. This can also be seen in Fig. 1.

In the event that the table is to be used as a table, it needs to be raised, using the lifting assembly, out of the recess to the position shown in Fig. 2. The table 5 is, therefore, lifted out of the recess 7 by the user (e.g. using a tab or just by grasping a part of the upper (here cushioned) part of the table that is visible or accessible at the seat pan. As the user lifts the table 5 out of the recess in direction A, this also draws the legs into their lifted position as shown in Fig. 2. This happens due to one end of each leg being fixed to a respective upper or lower bar and the other end moving within the respective slot as the table is lifted, the legs pivoting relative to each other about the point X.

The height of the table above the seat pan is determined by the length of the legs.

The lifting assembly may be provided with means to ensure that the end of the legs in the respective slots releasably locks into place at the inner end of the slot i.e. when the table has reached its raised position. The locking may be performed by a simple catch or detent or by means of a friction fit between the end of the leg and the end of the slot which can then be released by a simple mechanical operation or application of greater pressure to lower the table back into the recess.

When the table 5 is in the raised position shown in Fig. 5B, the table is pivoted about pivot point P (Fig. 5C) such that the lower table surface (here the cushioned surface) is rotated to face downwards towards the recess and, correspondingly, the upper, flat surface of the table pivots to face upwards to provide a table top, as shown in Fig. 5D.

The table 5 may be secured in its pivoted position by a simple catch or detent or by means of a friction fit between the table 5 and the upper bars or by e.g. side mounted spring-loaded ball locks. which can then be released by a simple mechanical operation or application of greater pressure to pivot the table back to the orientation shown in Fig. 5B for re-stowing into the recess.

The procedure for re-stowing the table is the reverse of the lifting procedure described above. When re-stowed, the table can provide a completely integrated and non-obtrusive seat surface.

The table system is simple, lightweight and compact but also rigid and secure and remains stable in all positions.

## Claims

1. A foldable table system for incorporation in a seat pan, the system comprising:
a table (5) having a first end (51a) and a second end (51b), a table top surface (51) extending from the first end to the second end, and a table bottom surface (52) extending from the first end to the second end, and
a lifting assembly (6) to which the table is attached, the lifting assembly expandable from a lowered position to a raised position as the table is raised from a stowed state to an open state, wherein the lifting assembly comprises:
an upper bar (72) and a lower bar (71) extending essentially parallel to each other, the upper bar being attached to the table (5), and
a pair of legs (73, 74) each having a first end (73a, 74a) connected to the upper bar (72) and a second end (73b, 74b) connected to the lower bar (71), the legs arranged to cross each other at a point (X) between the upper bar and the lower bar, and wherein one of the legs (73) has its first end fixedly connected to the upper bar (72) and its second end slidably connected to the lower bar, and the other of the legs has its first end fixedly connected to the lower bar and its second end slidably connected to the lower bar, such that as the upper bar is raised relative to the lower bar, the ends of the legs which are slidably connected slide along the respective bar towards the end of the opposite leg that is fixedly connected to that bar in a scissor motion.

2. The system of claim 1, further comprising a releasably locking means for releasably locking the slidably connected end of each leg to the respective bar when the upper bar has reached a given height relative to the lower bar.

3. The system of claim 1 or 2, wherein the upper bar and the lower bar each have a slot within which the respective ends of the legs are slidably connected to the respective bar.

4. The system of any preceding claim, wherein the table (5) is pivotably attached at a pivot point (P) to the upper bar (72).

5. The system of any preceding claim, wherein the bottom surface of the table is provided with cushioning (53).

6. The system of any preceding claim, comprising two said lifting assemblies, one provided on each side of the table.

7. The system of any preceding claim, further comprising a seat pan (3) having a recess (7) within which the lower bar of the or each lifting assembly is mounted and into which the lifting assembly and the table is stowed when the lifting assembly is in a lowered position.

8. The system of any preceding claim, further comprising a tab or strap attached to the table to lift the table.

9. A seat having a system as claimed in any preceding claim.

10. The seat of claim 8 being a vehicle seat, optionally an aircraft seat.

11. A method of operating a table of a system as claimed in any of claims 1 to 7, the method comprising grasping part of the table and moving the table in a raising direction causing the legs to move in the scissor motion to a raised position.

12. The method of claim 11, further comprising pivoting the table relative to the upper bar when in the raised position.

13. The method of claim 11 or 12, further comprising lowering the table by applying a force on the table in the lowering direction.
